# EUROPÄISCHE PATENTSCHRIFT

(11) **EP 2 987 622 B1**
(45) Veröffentlichungstag und Bekanntmachung des Hinweises auf die Patenterteilung: **21.02.2018**
(21) Anmeldenummer: 14181664.5
(22) Anmeldetag: 20.08.2014
(51) Int. Cl.: B29C 49/78, B29C 49/12, B29C 49/46

(54) **Formfüllmaschine und Verfahren zum Ausformen und Füllen von Behältern**
Mould filling machine and method of de-moulding and filling containers
Remplisseuse de moule et procédé de démoulage et de remplissage de récipients

(43) Veröffentlichungstag der Anmeldung: 24.02.2016
(73) Patentinhaber: Krones AG, 93073 Neutraubling (DE)
(72) Erfinder: Domeier, Bernhard, 93073 Neutraubling (DE)
(74) Vertreter: Grünecker Patent- und Rechtsanwälte PartG mbB

(56) Entgegenhaltungen:
- WO-A1-2013/063453
- WO-A1-2013/099108
- WO-A1-2014/103188
- FR-A1- 2 971 234
- US-A1- 2012 207 873

## Beschreibung

Die Erfindung betrifft eine Formfüllmaschine und ein Verfahren zum Ausformen und Füllen von Kunststoffbehältern. Genauer betrifft sie ein Verfahren zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter in der Hohlform, wobei das Produkt in die Kunststoffbehälter eingefüllt wird, während eine Reckstange oder ein Einfüllstutzen zumindest teilweise in den Kunststoffbehälter eingeführt ist.
Bekanntermaßen lassen sich Kunststoffbehälter im Streckblasverfahren aus Vorformlingen herstellen.
Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.
Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

WO2013063453, US2012207873 und EP2799208 offenbaren Verfahren und Vorrichtungen nach den Oberbegriffen der Ansprüche 1 und 4. Wenn eine Reckstange auch zum Einfüllen des Produkts verwendet wird oder zum Einfüllen ein Einfüllstutzen in den Behälter eingeführt wird, verdrängen diese im eingefüllten Produkt ein bestimmtes Volumen. Wenn die Reckstange bzw. der Einfüllstutzen am Ende des Einfüllprozesses aus dem Behälter gezogen werden sinkt daher der Füllstand. Abgesehen davon, dass daher der endgültige Füllstand vom Sollfüllstand abweicht, ist auch das Kopfraumvolumen größer als erwünscht, weil mit der eingeführten Reckstange bzw. dem eingeführten Einfüllstutzen bereits bei einer geringeren Menge von eingefülltem Produkt ein maximal zulässiger Füllstand erreicht wird. Es tritt also das Problem auf, dass der endgültige Füllstand des flüssigen Produkts schwanken kann, insbesondere niedriger als der Sollfüllstand sein kann.
Aufgabe der vorliegenden Erfindung ist es, bekannte Vorrichtungen und Verfahren zum Ausformen und Füllen von Kunststoffbehältern in vorteilhafter Weise so weiterzubilden, dass der endgültige Füllstand möglichst genau einstellbar ist.

Diese Aufgabe wird mit einer Formfüllmaschine nach Anspruch 4 und ein Verfahren nach Anspruch 1 gelöst. Vorteilhafte Ausführungsformen der Erfindung sind in den Unteransprüchen definiert.
Die Erfindung betrifft ein Verfahren zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter in der Hohlform, wobei das Produkt in die Kunststoffbehälter eingefüllt wird, während eine Reckstange oder ein Einfüllstutzen zumindest teilweise in den Kunststoffbehälter eingeführt ist. Erfindungsgemäß wird die Einführtiefe der Reckstange bzw. des Einfüllstutzens am Ende des Einfüllvorgangs derart eingestellt, dass das Volumen, das in dem Produkt durch die Reckstange bzw. den Einfüllstutzen verdrängt wird, einem vorgegebenen Soll-Kopfraumvolumen entspricht.
Durch das erfindungsgemäße Verfahren kann der endgültige Füllstand exakt eingestellt werden.
Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.
Die Reckstange kann derart ausgebildet sein, dass sie den Kunststoffvorformling derart streckt, dass er die Unterseite der Hohlform berührt. Die Reckstange kann Öffnungen umfassen, durch die ein Fluid, insbesondere das Produkt, in den Kunststoffbehälter oder aus dem Kunststoffbehälter strömen kann. Alternativ können das Fluid bzw. das Produkt unabhängig von der Reckstange in den Kunststoffbehälter gefüllt werden. In dem Verfahren kann auf die Reckstange verzichtet werden. Das Produkt kann dann mittels des Einfüllstutzens eingefüllt werden.
Die Einführtiefe der Reckstange bzw. des Einfüllstutzens entspricht dem Abstand zwischen der Oberkante des vorgeformten Halsbereichs des Kunststoffbehälters und dem unteren Ende der Reckstange bzw. des Einfüllstutzens. Unten bezieht sich dabei auf das Ende, welches dem Boden des Kunststoffbehälters zugewandt ist. Das Kopfraumvolumen ist das Volumen zwischen dem maximal zulässigen Füllstand während dem Einfüllvorgang, insbesondere der Oberkante des Kunststoffbehälters oder der Unterkante des bereits vorgeformten Halsbereichs des Kunststoffbehälters und dem Füllstand des Produkts. Entsprechend ist das Soll-Kopfraumvolumen das Volumen zwischen dem Sollfüllstand und dem maximal zulässigen Füllstand. Das Kopfraumvolumen ist typischerweise mit einem Gas, beispielsweise Luft, gefüllt. Der Sollfüllstand bzw. das Soll-Kopfraumvolumen sind vorgegebene Werte. Typischerweise ist es erwünscht, dass Kopfraumvolumen zu minimieren.

Der Einfüllvorgang gilt als beendet, wenn eine vorgegebene Sollmenge des Produkts in den Kunststoffbehälter abgefüllt wurde.

Die Einführtiefe der Reckstange bzw. des Einfüllstutzens kann, insbesondere zeitabhängig, derart eingestellt werden, dass ein tatsächlicher Füllstand einen vorgegebenen maximal zulässigen Füllstand in dem Kunststoffbehälter zu keinem Zeitpunkt des Einfüllvorgangs überschreitet. Dadurch kann zuverlässig verhindert werden, dass das Produkt überläuft.

Der maximale Füllstand kann mindestens zu einem Zeitpunkt, insbesondere am Ende, des Einfüllvorgangs erreicht werden. Dies löst besonders ein Problem, das auftritt, wenn der Kunststoffbehälter mit dem Produkt ausgeformt wird, nämlich dass es unter Umständen nicht ausreichend ist, wenn das Produkt zu keinem Zeitpunkt den Sollfüllstand überschreitet. Der Sollfüllstand liegt häufig, teilweise deutlich, unterhalb des Halsbereichs des Kunststoffbehälters und wenn dieser nicht überschritten wird, werden die Behälter im Schulterbereich möglicherweise unvollständig ausgeformt.

Die Einführtiefe kann während des Einfüllvorgangs gleich bleiben und erst am Ende des Einfüllvorgangs verändert werden, indem die Reckstange bzw. der Einfüllstutzen aus dem Kunststoffbehälter gezogen wird. Dieses Verfahren ist sehr einfach, weil keine Verstellung der Einführtiefe nötig ist. Dies ist möglich, wenn das Volumen, welches die Reckstange bzw. der Einfüllstutzen am Ende des Einfüllvorgangs verdrängt nicht größer ist, als das Soll-Kopfraumvolumen und solange die Summe des Volumens des eingeführten Teils der Reckstange bzw. des Einfüllstutzens geringer ist, als das durch den maximalen Füllstand vorgegebene Volumen. In diesen Fällen kommt es nicht zum Überlaufen, obwohl die Einführtiefe der Reckstange bzw. des Einfüllstutzens nicht geändert wird.

Die Reckstange bzw. der Einfüllstutzen können während des gesamten Einfüllvorgangs zumindest teilweise in das Produkt eingetaucht sein. Dies kann ein gleichmäßiges Einfüllen des Produkts ermöglichen, indem es Spritzen verhindert.

Die Einführtiefe der Reckstange bzw. des Einfüllstutzens kann bei steigendem Füllstand reduziert werden, insbesondere so reduziert, dass die Reckstange bzw. der Einfüllstutzen während des gesamten Einfüllvorgangs zumindest teilweise in das Produkt eingetaucht ist.

Das Reduzieren der Einführtiefe kann kontinuierlich oder in diskreten Schritten erfolgen.

Die Einführtiefe der Reckstange bzw. des Einfüllstutzens kann insbesondere so reduziert werden, dass sich das durch die Reckstange bzw. den Einfüllstutzen verdrängte Volumen in dem Produkt nicht erhöht, insbesondere gleichbleibt oder abnimmt.

Wird die Einführtiefe der Reckstange bzw. des Einfüllstutzens wie oben beschrieben bei steigendem Füllstand reduziert, kann insgesamt eine größere Menge von dem Produkt eingefüllt werden, ohne dass es den maximalen Füllstand überschreitet. Zudem kann das Einfüllen gleichmäßiger erfolgen, weil im bereits eingefüllten Produkt im unteren Teil des Kunststoffbehälters weniger Strömungen und Blasen erzeugt werden.

Ein Füllstandmesser kann den tatsächlichen Füllstand oder einen relativen Füllstand im Vergleich zu einem Referenzwert, beispielsweise dem maximal zulässigen Füllstand und/oder dem Sollfüllstand, bestimmen. Beispielsweise kann eine Regeleinrichtung vorgesehen sein, die den tatsächlichen Füllstand, insbesondere während des gesamten Einfüllvorgangs, mit dem Sollfüllstand abgleicht, so dass basierend auf dem Abgleich die Einführtiefe so eingestellt werden kann, dass der maximale Sollfüllstand nicht überschritten wird und/oder dass die Reckstange bzw. der Einfüllstutzen während des gesamten Einfüllvorgangs zumindest teilweise in das Produkt eingetaucht ist und/oder dass die Reckstange bzw. der Einfüllstutzen am Ende des Einfüllvorganges genau das Soll-Kopfraumvolumen verdrängt.

Die oben genannten Definitionen und Merkmale, sowie die im Zusammenhang mit dem Verfahren beschriebenen Vorteile treffen ebenfalls auf die im Folgenden beschriebene erfindungsgemäße Formfüllmaschine zu.

Die erfindungsgemäße Formfüllmaschine umfasst wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter in der Hohlform, wobei die Formfüllmaschine eine Stelleinrichtung zum Einstellen einer Einführtiefe einer Reckstange bzw. eines Einfüllstutzens in den Kunststoffbehälter umfasst. Die Stelleinrichtung ist derart ausgebildet, dass die Einführtiefe der Reckstange bzw. des Einfüllstutzens am Ende des Einfüllvorgangs derart eingestellt ist, dass das Volumen, das in dem Produkt durch die Reckstange bzw. den Einfüllstutzen verdrängt wird, einem vorgegebenen Soll-Kopfraumvolumen entspricht.
Die Stelleinrichtung kann zum gleichzeitigen Halten und Bewegen, insbesondere zum diskreten oder kontinuierlichen Bewegen, der Reckstange bzw. des Einfüllstutzens entlang des Hubs ausgebildet sein. Beispielsweise kann die Stelleinrichtung Kurven und/oder Gelenkarme mit Greifern umfassen. Die Stelleinrichtung kann einen Antrieb, beispielsweise einen Servomotor umfassen, der so ausgebildet ist, dass er die Reckstange bzw. den Einfüllstutzen bewegen und so die Einführtiefe einstellen kann. Die Stelleinrichtung, insbesondere der Antrieb, kann ansteuerbar sein, beispielsweise durch eine Steuer- und/oder Regeleinrichtung. Die Stelleinrichtung kann alternativ oder zusätzlich zum manuellen Einstellen der Einführtiefe ausgebildet sein.
Die Stelleinrichtung kann derart eingestellt sein, dass ein tatsächlicher Füllstand den maximal zulässigen Füllstand in dem Kunststoffbehälter zu keinem Zeitpunkt des Einfüllvorgangs überschreitet.
Die Formfüllmaschine kann eine Steuer- und/oder Regeleinrichtung umfassen, wobei die Steuer- und/oder Regeleinrichtung derart ausgebildet ist, dass sie die Stelleinrichtung zum Einstellen der Einführtiefe der Reckstange, insbesondere zeitabhängig, steuert.
Die Steuer- und/oder Regeleinrichtung kann die Stelleinrichtung insbesondere derart steuern, dass ein tatsächlicher Füllstand den maximal zulässigen Füllstand in dem Kunststoffbehälter zu keinem Zeitpunkt des Einfüllvorgangs überschreitet.
Die Steuer- und/oder Regeleinrichtung kann die Stelleinrichtung derart steuern, dass die Einführtiefe der Reckstange bzw. des Einfüllstutzens bei steigendem Füllstand reduziert wird, insbesondere so reduziert, dass die Reckstange bzw. der Einfüllstutzen während des gesamten Einfüllvorgangs zumindest teilweise in das Produkt eingetaucht ist.

Weitere Merkmale und Vorteile werden nachfolgend anhand der beispielhaften Figuren erläutert. Dabei zeigt:
- Figur 1: eine schematische, nicht-maßstabsgetreue Darstellung einer Formfüllmaschine;
- Figur 2: eine schematische, nicht-maßstabsgetreue Darstellung einer Behandlungsstation der Formfüllmaschine;
- Figur 3: eine schematische, nicht-maßstabsgetreue Darstellung eines Behälters zu einem ersten Zeitpunkt während des Einfüllvorgangs mit einer Reckstange in Streckposition;
- Figur 4: eine schematische, nicht-maßstabsgetreue Darstellung eines Behälters zu einem zweiten Zeitpunkt während des Einfüllvorgangs;
- Figur 5: eine schematische, nicht-maßstabsgetreue Darstellung eines Behälters zu einem dritten Zeitpunkt während des Einfüllvorgangs;
- Figur 6: eine schematische, nicht-maßstabsgetreue Darstellung eines Behälters am Ende des Einfüllvorgangs nach Entfernen der Reckstange bzw. des Einfüllstutzens;
- Figur 7: eine schematische, nicht-maßstabsgetreue Darstellung eines Behälters zu einem Zeitpunkt während des Einfüll- und Ausformvorgangs; und
- Figur 8: eine schematische, nicht-maßstabsgetreue Darstellung eines Ausschnittes eines Behälters am Ende des Einfüllvorgangs vor Entfernen der Reckstange bzw. des Einfüllstutzens.

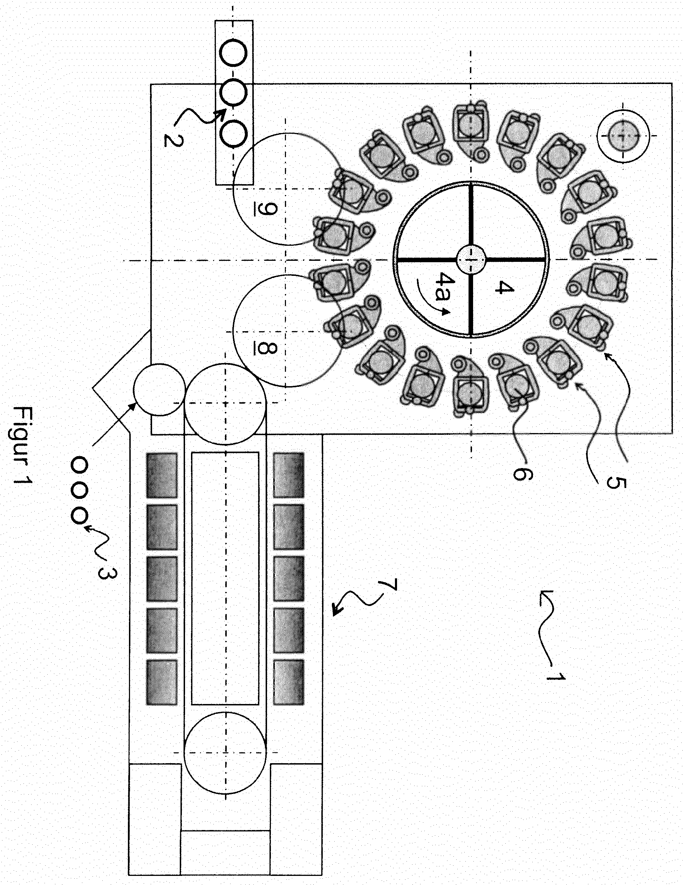

Figur 1 zeigt eine Formfüllmaschine 1 zum Ausformen und Füllen von Kunststoffbehältern 2. Die Behälter werden durch expandierendes Umformen von Kunststoffvorformlingen 3 erhalten. Dies erfolgt für jeden Kunststoffvorformling jeweils in einer Behandlungsstation 5. Die Formfüllmaschine umfasst ein Karussell 4, an dem die Behandlungsstationen angebracht sind und das im Betrieb kontinuierlich in Drehrichtung 4a rotiert. Jede Behandlungsstation umfasst eine Hohlform 6, in der ein Kunststoffbehälter ausgeformt und das Produkt eingefüllt wird. Die Kunststoffvorformlinge werden in einem Ofen 7 erwärmt und mittels eines Einlaufsterns 8 in die jeweilige Behandlungsstation transportiert und in die Hohlform eingebracht. Nach dem Ausformen und Füllen werden die Kunststoffbehälter mittels eines Auslaufsterns 9 aus der jeweiligen Hohlform entnommen.

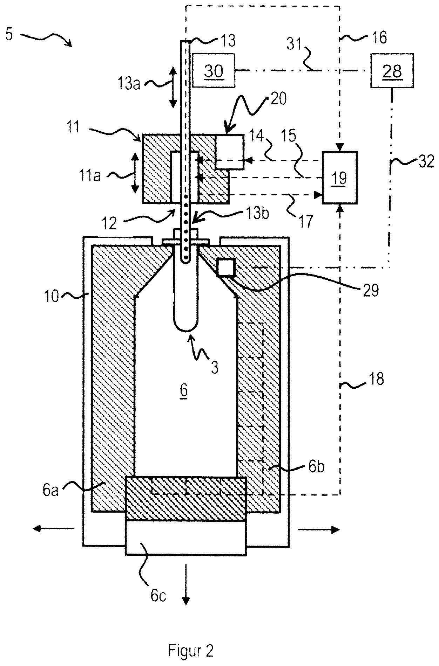

Figur 2 zeigt eine Seitenansicht der Behandlungsstation 5. In der Figur sind ein Ventilkopf 11 und der Hub 11a der Ventileinheit bezüglich der Hohlform 6 gezeigt. Die Hohlform 6 umfasst die Formteile 6a bis 6c. Die Hohlform wird durch einen, insbesondere mehrteiligen, Formträger 10 gehalten. Die Hohlform wird zum Einbringen der Kunststoffvorformlinge und zum Entnehmen der Kunststoffbehälter geöffnet (wie mit den Pfeilen in Figur 2 angedeutet) und zum Ausformen und Füllen geschlossen. Zudem zeigt die Figur eine Fluid- bzw. Blasdüse 12. Eine Reckstange 13, mit der der Kunststoffvorformling auf die Solllänge (entspricht der Höhe des fertigen Kunststoffbehälters) gestreckt wird, indem sie bis zum Boden der Hohlform in den Kunststoffvorformling eingeführt wird, und der Hub der Reckstange bezüglich der Ventileinheit 13a sind ebenfalls in Figur 2 abgebildet. Die Reckstange umfasst Öffnungen 13b für die Zufuhr und/oder Absaugung des Formfluids bzw. des Produkts. Die Zuleitung für das Formfluid 14 und die Zuleitung für das Produkt 15 können jeweils optional mit einem Ventil (hier nicht gezeigt) versehen sein. Die Figur zeigt verschiedene Absaugleitungen, die jeweils optional ein Ventil umfassen können, nämlich die hydraulische Absaugleitung für das Formfluid 16, die pneumatische Absaugleitung für den Innenraum des Behälters beim Füllen 17 und die pneumatische Absaugleitung für die Hohlform bzw. die Außenseite des Behälters beim Füllen 18. Die hier dargestellte Behandlungsstation umfasst weiterhin einen Medienverteiler 19, beispielsweise einen gemeinsamen Drehverteiler für die Behandlungsstationen, und einen Kompressor 20 für das Formfluid. Die Figur zeigt weiterhin eine Stelleinrichtung 30 für die Reckstange, mit der der Hub 13a und somit auch die Einführtiefe der Reckstange eingestellt wird. Zudem ist eine optional vorgesehene Steuer- und/oder Regeleinrichtung 28 gezeigt, die mit der Stelleinrichtung über die Datenverbindung 31 verbunden ist. Zudem ist ein optional vorgesehener Füllstandmesser 29 eingezeichnet, der mit der Steuer- und/oder Regeleinrichtung über die Datenverbindung 32 verbunden ist.

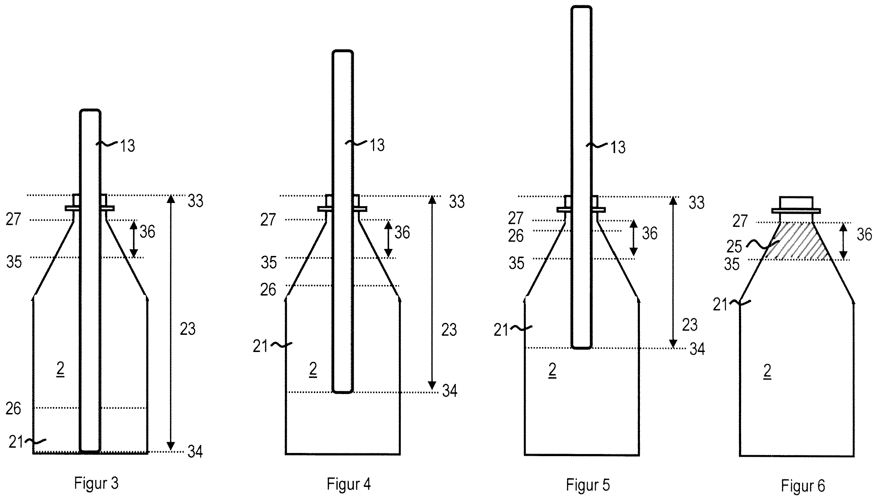

In den Figuren 3 bis 6 ist der Fall gezeigt, in dem der Kunststoffbehälter 2 bereits unter Verwendung der Reckstange ausgeformt wurde und das Formfluid, das zu Ausformung verwendet wurde, aus dem Kunststoffbehälter entfernt wurde. In diesem Fall wurde die Reckstange zum Einfüllen und Recken des Formfluids verwendet. Es ist sinnvoll, diese dann auch zum Einfüllen zu verwenden, da dann nicht erst die Reckstange entfernt und anschließend ein Einfüllstutzen eingeführt werden muss.

Die Figuren 3 bis 5 repräsentieren verschiedene aufeinanderfolgende Zeitpunkte einer Ausführungsform des Verfahrens. Figur 6 stellt einen Zeitpunkt nach Abschluss des erfindungsgemäßen Verfahrens dar, in der die Reckstange aus dem Behälter entfernt wurde. In dem erfindungsgemäßen Verfahren wurde die Reckstange 13 zum Recken des Vorformlings bis zum Boden der Hohlform eingeführt und verbleibt dort auch nach dem Ausformen und wird zum Einfüllen des Produkts 21 verwendet. Die Einführtiefe 23 der Reckstange wird reduziert, während der Füllstand 26 steigt. Hier wird die Einführtiefe der Reckstange durch die hier nicht dargestellte Stelleinrichtung automatisch eingestellt, gesteuert durch eine hier ebenfalls nicht gezeigte Steuereinrichtung. Die Form des Kunststoffbehälters 2, die einzufüllende Menge des Produkts und die Einfüllgeschwindigkeit sind als Parameter in einer (hier ebenfalls nicht gezeigten) Steuereinrichtung vorgegeben, so dass das zeitabhängige Einstellen der Einführtiefe erfolgen kann. In diesem Fall ist die Reckstange während des gesamten Einfüllprozesses in das Produkt eingetaucht. Eine Regeleinrichtung kann basierend auf Messwerten des Füllstands die Einführtiefe steuern. Die Reckstange muss nicht während des gesamten Einfüllprozesses in das Produkt eingetaucht sein. Das Verfahren kann ebenfalls mit einem Einfüllstutzen statt der Reckstange erfolgen, insbesondere, wenn bereits beim Ausformen auf eine Reckstange verzichtet werden konnte.
In Figur 3 ist ein Kunststoffbehälter 2 in Form einer bereits ausgeformten Flasche gezeigt, in der die Reckstange 13 bis zum Boden der Flasche eingeführt ist. Die hier eingetragene Einführtiefe 23 der Reckstange ergibt sich aus dem Abstand zwischen der Oberkante der Flasche 33 und der Unterkante der Reckstange 34. Linie 26 bezeichnet den tatsächlichen Füllstand des Produkts in der Flasche. Linie 27 bezeichnet den maximal zulässigen Füllstand und Linie 35 den Sollfüllstand. Es ergibt sich Höhendifferenz 36 zwischen dem maximal zulässigen Füllstand 27 und dem Sollfüllstand 35.
In Figur 4 ist die Reckstange 13 so eingestellt, dass ihre Einführtiefe 34 geringer ist als in Figur 3. Zudem ist im Vergleich zu Figur 3 eine größere Menge des Produkts eingefüllt, so dass der tatsächliche Füllstand 26 gestiegen ist, jedoch noch unter dem Sollfüllstand 35 liegt. In Figur 5 ist die Einführtiefe 34 der Reckstange 13 noch geringer als in den Figuren 3 und 4. Zudem ist der tatsächliche Füllstand 26 nun über den Sollfüllstand 35 gestiegen, liegt jedoch noch unter dem maximal zulässigen Füllstand 27.
In Figur 6 ist ein Zeitpunkt (nicht mehr Teil des erfindungsgemäßen Verfahrens) nach dem Ende des Einfüllprozesses und nach Entfernen der Reckstange 13 gezeigt, wobei das Produkt hier den Sollfüllstand 35 hat. So verbleibt in dem Bereich mit der Höhe 36 das Soll-Kopfraumvolumen 25.

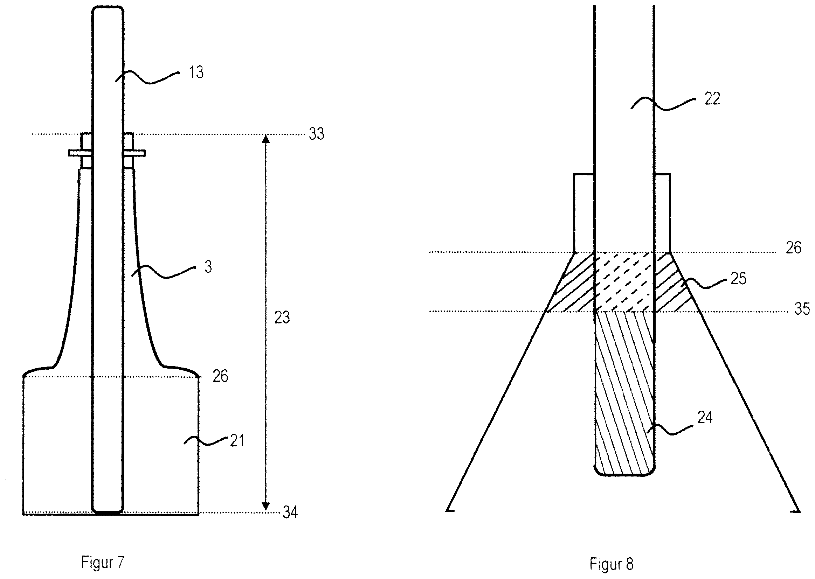

Das oben beschriebene Prinzip ist vergleichbar auch auf eine weitere Ausführungsform anwendbar, nämlich den Fall, dass das Produkt zum Ausformen der Kunststoffbehälter verwendet wird, wobei dann die zeitabhängige Form und das zeitabhängige Volumen des Behälters von der Menge des zugeführten Produkts und dem Druck, mit dem das Produkt zugeführt wird, abhängen. Damit eine vollständige Ausformung des Behälters erfolgt, ist es vorteilhaft, wenn der vorgegebene maximal zulässige Füllstand im bereits vorgeformten Halsbereich des Behälters liegt, so dass das Produkt den gesamten Schulterbereich der Flasche ausformt. Figur 7 zeigt einen Zeitpunkt eines solchen Verfahrens mit den gleichen Bezugszeichen, wie in den vorhergehenden Figuren.
In Figur 8 ist eine vergrößerte Ansicht des Flaschenhalses, in den ein Einfüllstutzen 22 eingeführt ist, gezeigt. In dieser Ansicht ist der Ausform- und Einfüllprozess abgeschlossen. Die hier gezeigte Situation trifft ebenfalls auf das Ende beider oben beschriebenen Verfahren zu, wobei hier statt des Einfüllstutzens die Reckstange in den Kunststoffbehälter eingeführt ist. Das Volumen 24 das in dem Produkt durch den Einfüllstutzen verdrängt wird, entspricht dem vorgegebenen Soll-Kopfraumvolumen 25. Es ist zu beachten, dass der Einfüllstutzen innen hohl ist und somit nur seine Wände Produkt verdrängen, insbesondere wenn der Einfüllstutzen am Ende des Einfüllvorganges vollständig entleert wird. Die Einführtiefe 34 des Einfüllstutzens kann dabei bereits während des gesamten Einfüllprozesses der Einführtiefe in Figur 7 entsprechen oder während des Einfüllvorgangs von einer ursprünglich größeren Einfülltiefe reduziert worden sein.

## Patentansprüche

1. Verfahren zum expandierenden Umformen von Kunststoffvorformlingen (3) zu Kunststoffbehältern (2) in einer Hohlform (6) und zum Einfüllen eines im Wesentlichen flüssigen Produkts (21) oder wenigstens einer flüssigen oder festen Komponente des Produkts (21) in die Kunststoffbehälter (2) in der Hohlform (6),
wobei das Produkt (21) in die Kunststoffbehälter (2) eingefüllt wird, während eine Reckstange (13) oder ein Einfüllstutzen (22) zumindest teilweise in den Kunststoffbehälter (2) eingeführt ist,
wobei die Einführtiefe (23) der Reckstange (13) bzw. des Einfüllstutzens (22) am Ende des Einfüllvorgangs derart eingestellt wird, dass das Volumen (24), das in dem Produkt (21) durch die Reckstange (13) bzw. den Einfüllstutzen (22) verdrängt wird, einem vorgegebenen Soll-Kopfraumvolumen (25) entspricht, **dadurch gekennzeichnet, dass** eine Steuer- und/oder Regeleinrichtung (28) eine Stelleinrichtung (30) zum Einstellen der Einführtiefe (23) der Reckstange (13) bzw. des Einfüllstutzens (22) basierend auf Messwerten eines Füllstandmessers (29) steuert.

2. Verfahren nach Anspruch 1, wobei die Einführtiefe (23) der Reckstange (13) bzw. des Einfüllstutzens (22), insbesondere zeitabhängig, derart eingestellt wird, dass ein tatsächlicher Füllstand (26) einen maximal zulässigen Füllstand (27) in dem Kunststoffbehälter (2) zu keinem Zeitpunkt des Einfüllvorgangs überschreitet.

3. Verfahren nach Anspruch 1 oder 2, wobei die Einführtiefe (23) der Reckstange (13) bzw. des Einfüllstutzens (22) bei steigendem Füllstand (26) reduziert wird, insbesondere so reduziert, dass die Reckstange (13) bzw. der Einfüllstutzen (22) während des gesamten Einfüllvorgangs zumindest teilweise in das Produkt (21) eingetaucht ist.

4. Formfüllmaschine (1) umfassend wenigstens eine Behandlungsstation (5) zum expandierenden Umformen von Kunststoffvorformlingen (3) zu Kunststoffbehältern (2) in einer Hohlform (6) und zum Einfüllen eines im Wesentlichen flüssigen Produkts (21) oder wenigstens einer flüssigen oder festen Komponente des Produkts (21) in die Kunststoffbehälter (2) in der Hohlform (6),
wobei die Formfüllmaschine (1) eine Stelleinrichtung (30) zum Einstellen einer Einführtiefe (23) einer Reckstange (13) bzw. eines Einfüllstutzens (22) in den Kunststoffbehälter (2) umfasst, wobei die Stelleinrichtung (30) derart ausgebildet ist, dass die Einführtiefe (23) der Reckstange (13) bzw. des Einfüllstutzens (22) am Ende des Einfüllvorgangs derart eingestellt ist, dass das Volumen (24), das in dem Produkt (21) durch die Reckstange (13) bzw. den Einfüllstutzen (22) verdrängt wird, einem vorgegebenen Soll-Kopfraumvolumen (25) entspricht, **dadurch gekennzeichnet, dass** die Formfüllmaschine eine Steuer- und/oder Regeleinrichtung (28) umfasst, die derart ausgebildet ist, dass sie die Stelleinrichtung (30) zum Einstellen der Einführtiefe (23) der Reckstange (13) bzw. des Einfüllstutzens (22), insbesondere zeitabhängig, basierend auf Messwerten eines Füllstandmessers (29) steuert.

5. Formfüllmaschine nach Anspruch 4, wobei die Stelleinrichtung (30) derart eingestellt ist, dass ein tatsächlicher Füllstand (26) einen maximal zulässigen Füllstand (27) in dem Kunststoffbehälter (2) zu keinem Zeitpunkt des Einfüllvorgangs überschreitet.

6. Formfüllmaschine nach Anspruch 4 oder 5, wobei die Steuer- und/oder Regeleinrichtung (28) die Stelleinrichtung insbesondere derart steuert, dass ein tatsächlicher Füllstand (26) den maximal zulässigen Füllstand (27) in dem Kunststoffbehälter (2) zu keinem Zeitpunkt des Einfüllvorgangs überschreitet.

7. Formfüllmaschine nach Anspruch 5 oder 6, wobei die Steuer- und/oder Regeleinrichtung (28) die Stelleinrichtung (30) derart steuert, dass die Einführtiefe (23) der Reckstange (13) bzw. des Einfüllstutzens (22) bei steigendem Füllstand (26) reduziert wird, insbesondere so reduziert, dass die Reckstange (13) bzw. der Einfüllstutzen (22) während des gesamten Einfüllvorgangs zumindest teilweise in das Produkt (21) eingetaucht ist.

## Claims

1. A method for forming, by means of expansion, plastic preforms (3) into plastic containers (2) in a hollow mold (6) and for filling a substantially liquid product (21) or at least a liquid or solid component of the product (21) into the plastic containers (2) in the hollow mold (6),
wherein the product (21) is filled into the plastic containers (2) while the respective plastic container (2) has inserted therein, at least partially, a stretching rod (13) or a filler neck (22),
wherein, at the end of the filling process, the insertion depth (23) of the stretching rod (13) or of the filler neck (22) is adjusted such that the volume (24) displaced in the product (21) by the stretching rod (13) or the filler neck (22) corresponds to a predetermined desired ullage (25),
**characterized in that**
a control and/or closed-loop control unit (28) controls an adjustment unit (30) for adjusting the insertion depth (23) of the stretching rod (13) or of the filler neck (22) based on measurement values of a filling level meter (29).

2. The method according to claim 1, wherein the insertion depth (23) of the stretching rod (13) or of the filler neck (22) is adjusted, in particular in a time-dependent manner, such that an actual filling level (26) will not exceed a maximum admissible filling level (27) in the plastic container (2) at any moment in time during the filling process.

3. The method according to claim 1 or 2, wherein the insertion depth (23) of the stretching rod (13) or of the filler neck (22) will be reduced as the filling level (26) rises, and will especially be reduced such that the stretching rod (13) or the filler neck (22) is immersed, at least partially, in the product (21) during the entire filling process.

4. A form fill machine (1) comprising at least one treatment station (5) for forming, by means of expansion, plastic preforms (3) into plastic containers (2) in a hollow mold (6) and for filling a substantially liquid product (21) or at least a liquid or solid component of the product (21) into the plastic containers (2) in the hollow mold (6),
wherein the form fill machine (1) comprises an adjustment unit (30) for adjusting an insertion depth (23) of a stretching rod (13) or of a filler neck (22) into the plastic container (2),
wherein the adjustment unit (30) is configured such that, at the end of the filling process, the insertion depth (23) of the stretching rod (13) or of the filler neck (22) is adjusted such that the volume (24) displaced in the product (21) by the stretching rod (13) or the filler neck (22) corresponds to a predetermined desired ullage (25),
**characterized in that**
the form fill machine comprises a control and/or closed-loop control unit (28), which is configured such that it controls, in particular in a time-dependent manner, the adjustment unit (30) for adjusting the insertion depth (23) of the stretching rod (13) or of the filler neck (22) based on measurement values of a filling level meter (29).

5. The form fill machine according to claim 4, wherein the adjustment unit (30) is adjusted such that an actual filling level (26) will not exceed a maximum admissible filling level (27) in the plastic container (2) at any moment in time during the filling process.

6. The form fill machine according to claims 4 or 5, wherein the control and/or closed-loop control unit (28) controls the adjustment unit in particular such that an actual filling level (26) will not exceed the maximum admissible filling level (27) in the plastic container (2) at any moment in time during the filling process.

7. The form fill machine according to claim 5 or 6, wherein the control and/or closed-loop control unit (28) controls the adjustment unit (30) such that the insertion depth (23) of the stretching rod (13) or of the filler neck (22) will be reduced as the filling level (26) rises, and will especially be reduced such that the stretching rod (13) or the filler neck (22) is immersed, at least partially, in the product (21) during the entire filling process.

## Revendications

1. Procédé pour le formage par expansion de préformes de matière plastique (3) pour former des contenants en matière plastique (2), dans un moule creux (6), et pour le remplissage des contenants en matière plastique (2) dans le moule creux (6) avec un produit (21) sensiblement liquide ou au moins avec un composant liquide ou solide du produit (21), procédé
d'après lequel les contenants en matière plastique (2) sont remplis avec le produit (21) pendant qu'une tige d'étirage (13) ou un embout de remplissage (22) est inséré au moins partiellement dans le contenant en matière plastique (2),
et d'après lequel la profondeur d'insertion (23) de la tige d'étirage (13) ou respectivement de l'embout de remplissage (22) est, à la fin de l'opération de remplissage, réglée de manière telle que le volume (24) qui, dans le produit (21), est refoulé par la tige d'étirage (13) ou respectivement l'embout de remplissage (22), corresponde à un volume d'espace de tête de consigne (25),
**caractérisé en ce qu'**un dispositif de commande et/ou de régulation (28) commande un dispositif de réglage (30) destiné à régler la profondeur d'insertion (23) de la tige d'étirage (13) ou respectivement de l'embout de remplissage (22), en se basant sur des valeurs de mesure d'un appareil de mesure du niveau de remplissage (29).

2. Procédé selon la revendication 1, d'après lequel la profondeur d'insertion (23) de la tige d'étirage (13) ou respectivement de l'embout de remplissage (22), est réglée, notamment en fonction du temps, de manière telle qu'un niveau de remplissage effectif (26) ne dépasse à aucun instant de l'opération de remplissage, un niveau de remplissage maximal admissible (27) dans le contenant en matière plastique (2).

3. Procédé selon la revendication 1 ou la revendication 2, d'après lequel la profondeur d'insertion (23) de la tige d'étirage (13) ou respectivement de l'embout de remplissage (22) est réduite lorsque le niveau de remplissage (26) augmente, notamment réduite de façon telle que la tige d'étirage (13) ou respectivement l'embout de remplissage (22) soit plongé au moins partiellement dans le produit (21) pendant la totalité de l'opération de remplissage.

4. Machine de formage et de remplissage (1) comprenant au moins un poste de traitement (5) destiné au formage par expansion de préformes de matière plastique (3) pour former des contenants en matière plastique (2), dans un moule creux (6), et pour le remplissage des contenants en matière plastique (2) dans le moule creux (6) avec un produit (21) sensiblement liquide ou au moins avec un composant liquide ou solide du produit (21), machine de formage et de remplissage (1)
dans laquelle il est prévu un dispositif de réglage (30) destiné à régler la profondeur d'insertion (23) d'une tige d'étirage (13) ou respectivement d'un embout de remplissage (22) dans le contenant en matière plastique (2), et
dans laquelle le dispositif de réglage (30) est conçu de façon telle, que la profondeur d'insertion (23) de la tige détirage (13) ou respectivement de l'embout de remplissage (22) soit, à la fin de l'opération de remplissage, réglée de manière telle que le volume (24) qui, dans le produit (21), est refoulé par la tige d'étirage (13) ou respectivement l'embout de remplissage (22), corresponde à un volume d'espace de tête de consigne (25),
**caractérisée en ce que** la machine de formage et de remplissage comprend un dispositif de commande et/ou de régulation (28), qui est conçu de manière à commander le dispositif de réglage (30) destiné à régler la profondeur d'insertion (23) de la tige d'étirage (13) ou respectivement de l'embout de remplissage (22), notamment en fonction du temps, en se basant sur des valeurs de mesure d'un appareil de mesure du niveau de remplissage (29).

5. Machine de formage et de remplissage selon la revendication 4, dans laquelle le dispositif de réglage (30) est réglé de manière telle qu'un niveau de remplissage effectif (26) ne dépasse à aucun instant de l'opération de remplissage, un niveau de remplissage maximal admissible (27) dans le contenant en matière plastique (2).

6. Machine de formage et de remplissage selon la revendication 4 ou la revendication 5, dans laquelle le dispositif de commande et/ou de régulation (28) commande le dispositif de réglage, notamment de manière telle qu'un niveau de remplissage effectif (26) ne dépasse à aucun instant de l'opération de remplissage, le niveau de remplissage maximal admissible (27) dans le contenant en matière plastique (2).

7. Machine de formage et de remplissage selon la revendication 5 ou la revendication 6, dans laquelle le dispositif de commande et/ou de régulation (28) commande le dispositif de réglage (30) de manière telle que la profondeur d'insertion (23) de la tige d'étirage (13) ou respectivement de l'embout de remplissage (22) soit réduite lorsque le niveau de remplissage (26) augmente, notamment réduite de façon telle que la tige d'étirage (13) ou respectivement l'embout de remplissage (22) soit plongé au moins partiellement dans le produit (21) pendant la totalité de l'opération de remplissage.
